# EUROPEAN PATENT APPLICATION

(11) **EP 4 797 617 A1**
(43) Date of publication of application: **26.08.2026**
(21) Application number: 25159410.7
(22) Date of filing: 21.02.2025
(51) Int. Cl.: H04L 9/40, G06F 21/57

(54) **CONTROLLING RISKY BEHAVIOR ON CONNECTED DEVICE OF HOUSEHOLD**

(71) Applicant: Cujo LLC, Covina, CA 91723 (US)
(72) Inventor: Janon , Au ra, 45257 Kaunas (LT); Cafasso, Matteo, 02150 Espoo (FI)
(74) Representative: TBK

(57) **Abstract**

It is determined (112) that a risk score for a household accessing the Internet from one or more connected devices via a customer-premises equipment of the household meets a predetermined condition. A use of a software platform enabling a risky behavior on a specific connected device of the one or more connected devices is detected (114). In response to determining (112) that the risk score for the household accessing the Internet from the one or more connected devices via the customer-premises equipment of the household meets the predetermined condition and detecting (114) the use of the software platform enabling the risky behavior on the specific connected device of the one or more connected devices, a data transmission from the software platform on the specific connected device to the Internet via the customer-premises equipment of the household is blocked (128).

## Description

### FIELD

The invention relates to a method, apparatus, computer program product, and computer-readable medium.

### BACKGROUND

Internet fraud is a form of criminal deception, which is carried out over the Internet. It is nowadays a major challenge for governments and institutions costing billions of dollars per year. Usually, a victim is approached through a communication medium such as a smartphone. The attacker is after assets (usually money) of the victim. Money is extracted from the victim in different ways: bank transfers, stealing of access credentials, credit card stealing, etc. For the fraud to succeed, the attacker needs to convince the victim to perform several actions on his/her connected device. As it is difficult for the attacker to persuade the victim to perform these actions by verbal instructions during a phone call, the attacker may convince the victim to grant an access for the attacker to the connected device of the victim. So far, it seems that the only effective prevention mechanism is education of the potential victims. Yet, potential victims may be hard to reach and have a poor understanding of information technology in general.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A and FIG. 1B are flowcharts illustrating examples of a method;
FIG. 2 is a block diagram illustrating an example implementation environment for the method;
FIG. 3A and FIG. 3B are block diagrams illustrating examples of a cybersecurity apparatus;
FIG. 4 is a block diagram illustrating an example of a connected device;
FIG. 5 is a block diagram illustrating an example of a computing resource; and
FIG. 6A and FIG. 6B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The internet fraud may be prevented by controlling a risky behavior of a user on a connected device of a household. Such controlling is based on two different aspects: a risk score for the household, and a use of a software platform enabling the risky behavior. As certain conditions related to the risk score and the use of the software platform enabling the risky behavior are met, the fraud may be prevented by blocking data transmission of the connected device to the Internet via a customer-premises equipment of the household. As the required processing is done in the customer-premises equipment and/or in a computing resource operated by a network service provider, the connected device does not require any special software, nor an active co-operation from the affected user of the connected device.

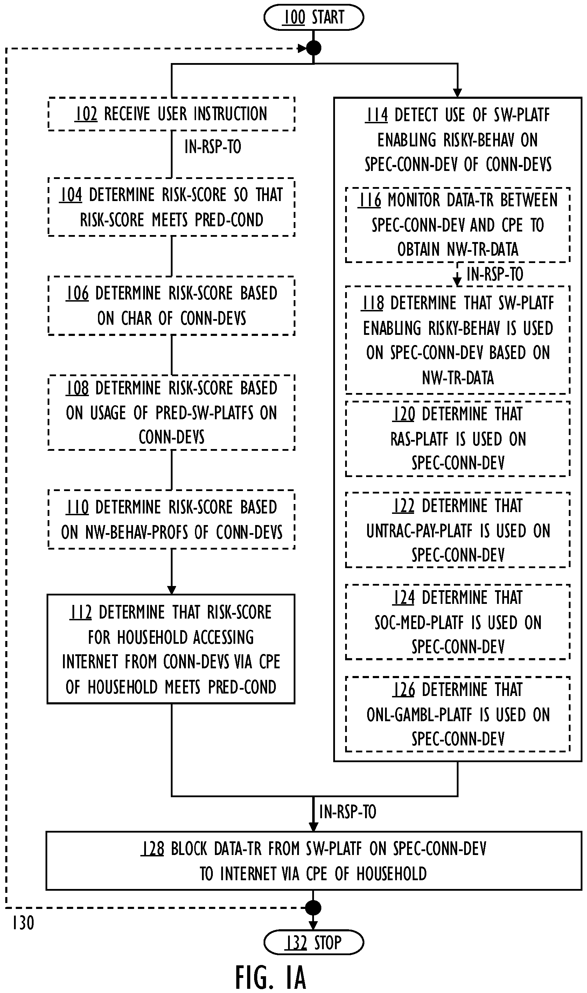

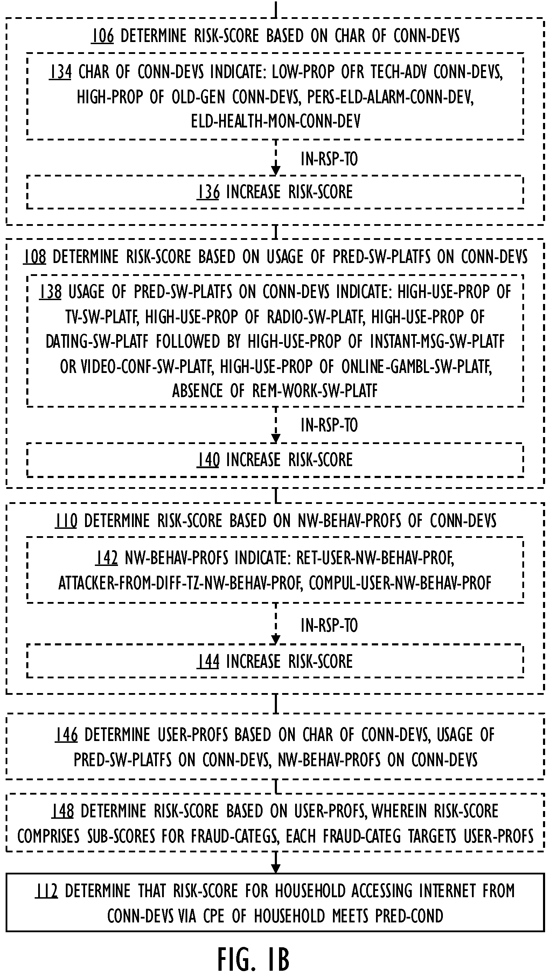

FIG. 1A and FIG. 1B are flowcharts illustrating examples of a computer-implemented method. The method performs operations related to controlling the risky behavior on the connected device of the household. The method starts in 100 and ends in 132. The method may run in principle endlessly. The infinite running may be achieved by looping 130 back as shown in FIG. 1A.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

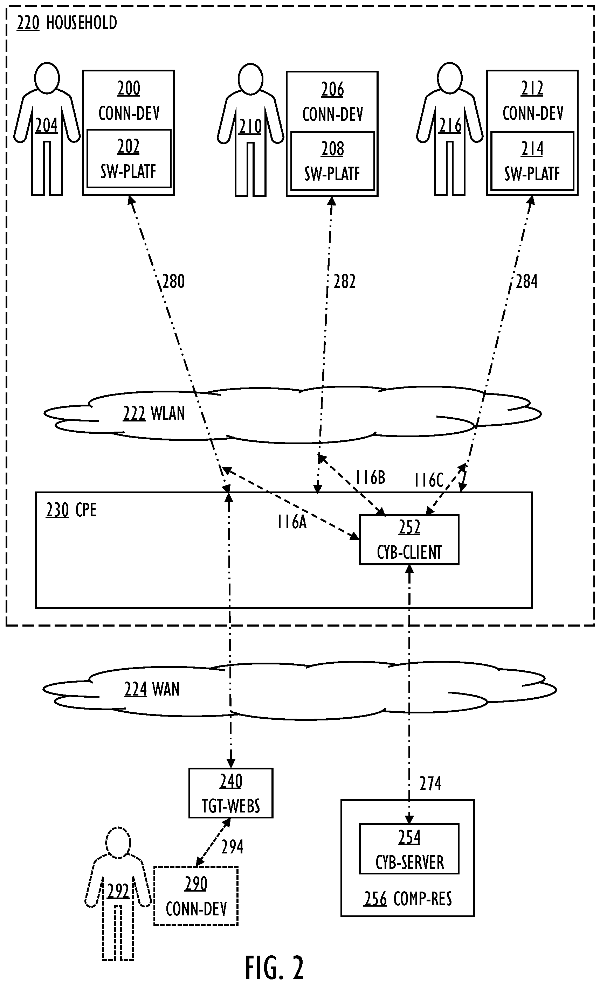

FIG. 2 is a block diagram illustrating an example implementation environment for the computer-implemented method. The method may operate within the customer-premises equipment 230, but optionally also partly within the computing resource 256.

Two operations 112, 114 may be performed concurrently, partly overlapping, or successively (performing first the operation 112 followed by the operation 114, or vice versa).

In the operation 112, it is determined that a risk score for the household 220 accessing the Internet 224 from one or more connected devices 200, 206, 212 via the customer-premises equipment 230 of the household 220 meets a predetermined condition.

In the operation 114, a use of a software platform 202 enabling a risky behavior on a specific connected device 200 of the one or more connected devices 200, 206, 212 is detected.

In response to determining 112 that the risk score for the household 200 accessing the Internet 224 from the one or more connected devices 200, 206, 212 via the customer-premises equipment 230 of the household 220 meets the predetermined condition and detecting 114 the use of the software platform 202 enabling the risky behavior on the specific connected device 200 of the one or more connected devices 200, 206, 212, a data transmission 280 from the software platform 202 on the specific connected device 200 to the Internet 224 via the customer-premises equipment 230 of the household 220 is blocked 128. Besides blocking 128 the data transmission 280, other cybersecurity operations may also be performed. These operations may target the specific connected device 200, the one or more connected devices 200, 206, 212, and/or the one or more software platforms 202, 208, 214 to stop an ongoing scam, or to prevent a future scam.

In this way, using the operations 112, 114, 128, the internet fraud may be prevented by controlling the risky behavior of the user 204 on the specific connected device 200 of the household 220.

Next, various examples for determining 104 the risk score are disclosed.

In general, three main sources of information may be useful to categorize the users 204, 210, 216 within the household 220: the connected devices 200, 206, 212, which are usually seen within the household 220, the most commonly used software platforms 202, 208, 214 and their categorization, and the overall network behavioral profiles (browsing, streaming, gaming, etc.) as well as the usage patterns. With suitable heuristics based on the above mentioned data, a risk score may be determined for the household 220. The risk score may be based on vulnerability scores of individual users 204, 210, 216 and/or fraud risk categories of the users 204, 210, 216. If the risk score is relatively high, such as the risk score meeting a predetermined condition (the risk score exceeding a predetermined risk value threshold, for example), then the household 220 needs to be protected against scams caused by the risky behavior. The risky behavior is manifested by the use of software platforms enabling the risky behavior.

For example, a household 220 with four smartphones, four personal computers, two gaming platforms, one smart television, and one smart refrigerator as the connected devices 200, 206, 212 may suggest a group of four users 204, 206, 212. Adding on top of this information a further observation of two parallel online gaming sessions after 4PM may suggest a family with two kids. Another example may be a household 220 with one personal computer, infrequent Internet activity mostly consisting of browsing public administration services. This may indicate a household 220 with a single elderly person 204.

Typical target persons for the Internet scams include elderly persons, single and lonely persons, or persons with various compulsive behavior patterns.

In an example, in response to receiving 102 a user instruction, the risk score is determined 104 so that the risk score meets the predetermined condition. The user instruction may be generated in a user management interface (not illustrated in FIG. 2) of the customer-premises equipment 230. The user management interface may display information regarding users 204, 210, 216 and/or connected devices 200, 206, 212 of the household 220. One or more of the users 204, 210, 216 of the household 220 may have administrator rights for the customer-premises equipment 230 thereby being able to determine, using the user management interface, access rights for each user 204, 210, 216 and/or for each connected device 200, 206, 212. In the same way, using the user management interface, the risk score may be determined for the household 220. The risk score may be defined for the whole household 220 as a single entity. This is because if one or more users 204, 210, 216 of the household 220 are prone to the risky behavior, the whole household 220 needs to be defined as risky, as otherwise the problematic user 204 may use, besides his/her own connected device 200, another connected device 206, 212 of the household 220 to gain access to the risky service.

In this way, the user instruction may be received from one of the one or more connected devices 200, 206, 212 of the household 220. The user instruction may be generated by the user 204 himself/herself with personal connected device 200. Alternatively, the user 204 may generate the user instruction with another connected device 206, 212 of the household 220. Or another user 210, 216 of the household 220 may generate the user instruction. The vulnerability of the household 220 may cause a need to increase the risk score for the household 220. The vulnerability may be caused by an elderly user 204 of the household 220, a teenage user 204 of the household 220, or an impaired user 204 of the household 220, for example. In such a case, a guardian of the household 220 may have a legitimate right to increase the risk score for the household 220 so as to protect its vulnerable member(s) from the fraud.

In an example, the risk score is determined 106 based on characteristics of the one or more connected devices 200, 206, 212. In an example, this may be implemented so that in response to the characteristics of the one or more connected devices 200, 206, 212 indicating 134 one or more of a low proportion of technologically advanced connected devices 200, 206, 212, a high proportion of old generation connected devices 200, 206, 212, a personal elderly alarm connected device, and an elderly health monitoring connected device, the risk score is increased 136. In this use case, the characteristics of the one or more connected devices 200, 206, 212 indicate that the household 220 predominantly, or only, comprises elderly users, such as an elderly couple 204, 210. On the other hand, if the characteristics of the connected devices 200, 206, 212 indicate a tech-savvy household 220, by having a high-proportion of newest generation technologically advanced connected devices 200, 206, 212, or by having a high-proportion of Linux connected devices 200, 206, 212, for example, the risk score may be decreased, even to a degree that the described method is not applied, unless the user instruction as previously described is used to determine 104 the risk score so that the risk score meets the predetermined condition.

In an example, the risk score is determined 108 based on a usage of predetermined software platforms on the one or more connected devices 200, 206, 212. In an example, this may be implemented so that in response to the usage of the predetermined software platforms on the one or more connected devices 200, 206, 212 indicating 138 one or more of a high proportion of use of a television software platform, a high proportion of use of a radio software platform, a high proportion of use of a dating software platform followed by a high proportion of use of an instant messaging software platform or a video conferencing software platform or a social media software platform, a high proportion of use of an online gambling software platform, and an absence of a remote working software platform, the risk score is increased 140.

In a use case, the usage of the predetermined software platforms on the one or more connected devices 200, 206, 212 indicates that the household 220 predominantly, or only, comprises elderly users, such as an elderly couple 204, 210 provided that the legacy media (such as the television, and the FM/AM radio) is used predominantly, and the remote working software platform is not used at all, for example. The elderly people may be an easy target for the scam as they are often left alone and possess only limited skills related to the connected devices 20, 206, 212 and their software platforms 202, 208, 214. The elderly users 204, 210 may have a smartphone and a desktop computer, both of a relatively old model.

Typically, a single elderly person 204 will consume content from the television set and radio. Such user 204 may make sparse use of various Internet platforms such as social media and mainly uses an email platform when necessary. For elderly users 204, 210, an advanced use of software or high intensity online gaming is rarely observed. But streaming may be observed when communicating with relatives or friends.

Retired people usually do not work and may spend more time at home. Their routines may be more consolidated leading to visible repeating patterns. For example, news may be consumed early in the morning, online grocery shopping may be done before lunch (i.e., when most of the working people are not visiting the online stores). This may become visible over the network usage: user connected devices 200, 206 connecting/disconnecting at same time during the day, and activities such as streaming or browsing being observed around the same time during normal working hours.

Besides elderly people, also relatively young people may have limited skills related to the connected devices 200, 206, 212 and their software platforms 202, 208, 214, making them vulnerable targets for the scams.

Elderly users 204, 210 may be vulnerable to various types of Internet scams, including, but not being limited to: a senior romance scam, a tech support scam, a grandparent scam, or a government impersonation scam. In all these scams, a malicious user 292 may connect 294 with a connected device 290 to a service 240 used by the scammed user 204. The motivation for the scammed person to believe in the scammer 292 may be based on romantic feelings toward the scammer 292 (the senior romance scam), trust in a technical support person 292 (the tech support scam), desire to help the scammer 292 impersonating as a grandchild in distress (the grandparent scam), or trust in the scammer 292 impersonating as a government authority such as police or tax authority (the government impersonation scam).

The usage of the predetermined software platforms in an opposite fashion may indicate a relatively young, and possibly a technically savvy user. For example, the use of new streaming media platforms such as Netflix^{®}, and the use of a remote working platform such as Microsoft Teams^{®} may cause that the risk score of the household 220 is decreased.

In a use case, the usage of the predetermined software platforms on the one or more connected devices 200, 206, 212 indicates that the household 220 comprises at least one user 204 vulnerable to a romance scam provided that a high proportion of use of a dating software platform followed by a high proportion of use of an instant messaging software platform or a video conferencing software platform or a social media software platform is detected. In the romance scam, the scammer 292 creates a fake online identity to gain affection and trust of the victim 200. The scammer 292 uses an illusion of a romantic relationship to manipulate the victim 200 into sending money or sharing personal information.

In other words, another user profile that may be falling for the Internet scams are lonely people looking for romantic relationships. They may be middle-aged people in a single person 204 household 220. Some studies suggest that such people may also be addictive personalities. These categories of scam often run for a long period of time as the scammer 292 slowly gains the trust of the victim 204 through romantic manipulation. Such household 220 will show similarities with the example of a single person living in the household. There may be differences, in the form of more IoT devices as the connected devices, for example, as the victim 204 may be more tech friendly. Most significant part of usage may be social media applications. Large use of dating applications (Tinder^{®}, Bumble^{®}) may be observed. As the fraud proceeds, the victim 204 may be moving onto other social media platforms such as instant messaging (WhatsApp^{®}), video conferencing (Zoom^{®}, Skype^{®}), and social media (Facebook^{®}). Communication and social media applications usage may be a prominent pattern. As the scammer 292 may come from a different time zone, the use of social media platforms may happen at unusual times such as early in the mornings or late at nights. Once a person 204 with the above network profile is identified, the method may re-configure the network security profile to block any international banking platform app or a cryptocurrency platform. This may especially be done if no or very few of such sessions were ever identified from that specific household 220 in the past.

In a use case, the usage of the predetermined software platforms on the one or more connected devices 200, 206, 212 indicates that the household 220 comprises at least one user 204 vulnerable to compulsive online gambling provided that that a high proportion of use of an online gambling software platform is detected. As such, the online gambling software platform may be a legitimate Internet service, but if the user 204 is vulnerable to the compulsive gambling, the free use of such service may be regarded as amounting to a fraud or at least immoral service provision. Besides the compulsive online gambling, the same type of detection may be applied to the compulsive online shopping, compulsive online porn addiction, etc. based on a high proportion of use of an online shopping software platform, a high proportion of use of an online porn software platform, etc.

In other words, another user profile often targeted by online fraudsters 292 are people with different compulsive or obsessive behavioral issues. Such people may be vulnerable to types of manipulation, wherein urgency is manifested in form of either an incredible opportunity (Nigerian Scam) or an issue (Parking Fine/Tax Scam). The person 204 is made to believe that in order to seize the opportunity or avoid a pressing issue, he/she 204 needs to pay a sum of money via an untraceable payment method. A person with compulsive shopping issues may end up acquiring more than is actually needed. As his/her judgment capability may be hindered, a high number of unnecessary connected devices 200, 206, 212 connected to the household network 222 may be observed. A high amount of dubious IoT devices may be observable in the network 222 of such household 220. An abnormal usage of specific software platforms may be observed. A compulsive consumer of streaming content may be seen spending a visible amount of time for Netflix^{®}, for example. Gaming platforms may be another indicator of such issues. A compulsive consumer 204 may also spend a lot of time on eCommerce platforms. A paranoid/obsessed person may be browsing for an extensive amount of time on particular forums/social medias (related to conspiracy theories, for example). On the network usage profile, the expectation is to see long-lasting sessions of activity extending beyond the usual norm. Also, the timelines of consumption may be a strong indicator. For example, long lasting online gaming sessions, which extend late into the night, or streaming over-consumption during working hours may be observed. Once a person with the above network profile is identified, the method may re-configure the network security profile to block any international banking platform app or crypto-currency platform, especially if no or very few such sessions were ever identified from that specific household 220.

In an example, the risk score may be defined so that it takes into account user profiles within the household 220. The user profile may comprise an elderly person, an elderly couple, a single person, a young person, a person with compulsive or obsessive behavior, etc.

Using partly the operations described above, one or more user profiles for the household 220 are determined 146 based on the characteristics of the one or more connected devices 200, 206, 212, and/or the usage of predetermined software platforms 202, 208, 214 on the one or more connected devices 200, 206, 212, and/or the one or more network behavioral profiles of the one or more connected devices 200, 206, 212.

The risk score is then determined 148 based on the one or more user profiles for the household 220. The risk score may comprise one or more sub-scores for one or more fraud categories, wherein each fraud category targets the one or more user profiles. In this way, the risk score may have more granularity to take into account user profiles for the household 220. Specific software platforms 202, 208, 214 that enable the risky behavior in the fraud categories with high sub-scores may be pinpointed for the detection 114. For example, the fraud categories may comprise a gambling fraud category, and a romance fraud category. If the user profile within the household 220 comprises a single person user profile, then the fraud category that may especially target such a person may be the romance fraud category. Consequently, the sub-score for the for romance fraud category is high. Note that the household 220 may comprise several different sub-scores for each user category of the household 220. Also, even if the household 220 only has one user 204, there may be several user profiles linked to that person 204, such as a young person user profile and a compulsive or obsessive behavior user profile, and then even the one-user household 220 may have two different user profiles with their sub-scores to protect the user 204 from two different fraud categories.

Particular caution needs to be exercised when implementing the method. The obvious risk to avoid is profiling people and label them in ways that may be discriminatory. This risk may be mitigated by clearly stating the intention of the method, and transparently explaining reasons that led the household 220 to be profiled in a specific manner. False positives may be controlled via the customer care application of the network provider commissioning the customer-premises equipment 230. There may be legitimate true positives, which may still prove problematic. For example, the son of an elderly man is using a remote access software to help his father with his personal computer. A situation like this may easily be handled by alerting the involved people and allowing the data transmission through the customer-premises equipment 230. An allow-list is also a feasible mean to work around such scenarios.

In an example, the risk score is determined 110 based on one or more network behavioral profiles of the one or more connected devices 200, 206, 212. In an example, this may be implemented so that in response to the one or more network behavioral profiles indicating 142 one or more of a retired user network behavioral profile, an attacker from a different time zone network behavioral profile, a compulsive user network behavioral profile, the risk score is increased 144.

In these use cases, the risk may be determined to be higher than normal because of the vulnerability of the user 204 due to various reasons, the user 204 being retired due to age or a health-induced inability, or the user 204 being prone to compulsive behavior as described earlier, for example. Another reason may be that the attacker 292 is operating on a different time-zone, i.e., in a different part of the world, than the victim 204.

Next, various examples for detecting 114 the use of the software platform enabling the risky behavior are disclosed.

In an example, a wireless data transmission 280 between the specific connected device 200 and the customer-premises equipment 230 is monitored 116A to obtain network traffic data, and it is determined 118 that the software platform enabling the risky behavior is used on the specific connected device 200 based on the network traffic data.

In an example, it is determined 120 that a remote access software platform is used on the specific connected device 200.

The use of the remote access software may indicate an ongoing technical support scam by the scammer 292 against the targeted user 204. The scammer 292 may initiate contact with the victim 204 through an unsolicited phone call, a pop-up message, or an email message. The scammer 292 may claim to be from a reputable tech support company, and warn the victim 204 about supposed issue such as malware or computer virus with his/her connected device 200. The scammer 292 may create a sense of urgency, convincing the victim 204 that an immediate action is needed, which coerces the victim 204 into compliance. The scammer 292 instructs the victim 204 to download and install remote access software, such as TeamViewer^{®}, Microsoft Quick Assist^{®}, Google Remote Desktop^{®}, HopToDesk^{®}, and AnyDesk^{®}. The remote access software as such is a legitimate tool, but now it allows the scammer 292 to control the connected device 204 of the victim 204 as if the scammer 292 were physically present. The scammer 292 may now show fake error messages, run bogus diagnostics, or claim to fix non-existent issues on the attacked connected device 200. The scammer 292 may demand payment for services, which may include unnecessary software, fake repairs, or extended support plans, for example. The scammer 292 may also ask for personal and financial information of the victim 204. In addition to, or instead of the payment, the scammer 292 may install malware or spyware on the connected device 200 of the victim 204 to steal sensitive information, such as passwords, bank details, and personal files. Even after the successful scam, the scammer 292 may continue to exploit the victim 204 by maintaining remote access to his/her connected device 200 from the connected device 290 of the scammer 292.

In an example, it is determined 122 that an untraceable payment platform is used on the specific connected device 200. The untraceable payment platform may be a cryptocurrency platform, such as Coinbase^{®}, Binance^{®}, or Kraken^{®}, which allows the user 204 to buy, sell, trade, and manage cryptocurrencies, such as Bitcoin^{®}. The untraceable payment platform may also be a digital crypto wallet (residing in the connected device 200) to securely store the cryptocurrencies. Or the untraceable payment platform may enable untraceable money transfer, using SendCrypto^{®}, Kraken^{®}, or Western Union^{®}, for example.

In an example, it is determined 124 that a social media platform is used on the specific connected device 200. The social media platform is an online service or application that enables the user 204 to create, share, and interact with content and with other users, also with an eventual scammer 292. Such social media platforms include Facebook^{®}, Tinder^{®}, and numerous others.

In an example, it is determined 126 that an online gambling platform is used on the specific connected device 200. The online gambling platform may be an online casino, or another legitimate or even illegal platform enabling compulsive gambling.

As shown in FIG. 2, wireless data transmissions 280, 282, 284 from a plurality of connected devices 200, 206, 212 of various device types of the household 220 to the customer-premises equipment are monitored 116A, 116B, 116C. This may be implemented so that the wireless data transmissions 280, 282, 284 are monitored by the customer-premises equipment 230 in its wireless local area network 222.

As used herein, the term "connected device" 200, 206, 212 refers to a physical device with communication capabilities.

As used herein, the term "customer-premises equipment" 230 refers to a physical device providing the wireless local area network 222 for the connected devices 200, 206, 212 and an access for each connected device 200, 206, 212 to a wide area network (WAN) 224 such as the Internet.

The wireless data transmission 280 is transferred over a wireless connection between the connected device 200 and the customer-premises equipment 230. The connection is first established between the connected device 200 and the customer-premises equipment 230. Next, the wireless data transmission 280 may extend from the connected device 200 via the WLAN 222 and WAN 224 to a target website 240 using a Hypertext Transfer Protocol/Hypertext Transfer Protocol Secure (HTTP/HTTPS) connection. The establishment of the HTTP/HTTPS connection may also require a wireless data transmission with a domain name system (DNS) server (not illustrated in FIG. 2).

In the wireless data transmission 280, data packets may be transferred from and to the connected device 200. In an example, the customer-premises equipment 230 is configured to generate a wireless non-cellular internet access network 222. The customer-premises equipment 230 may be configured to operate at a home or an office of a user 204 of the connected device 200.

Next, let us study how a cybersecurity operator is capable of monitoring the wireless data transmission 280.

First, the wireless connection between the connected device 200 and the customer-premises equipment 230 is monitored 102. A website access application, such an application belonging to the software platform 202 running in the connected device 200 may seek to establish a connection to a target website 240, for example. As shown in FIG. 2, the connection between the connected device 200 and the customer-premises equipment 230 is routed through an access of the WAN 224 to the target website 240 to implement the wireless data transmission 280.

The connected devices 200 (such as user devices or Internet of Things (IoT) devices) use websites for various operations. The user 204 of the (user) connected device 200 may use a browser to browse webpages of the website 240, to view media content provided on the webpages, or to connect to a service running on the website 240, for example. The (IoT) connected device 200 may upload sensor data gathered by one or more sensors onboard the connected device 200 to the website 240, for example. The connected device 200 may download a software update from the website 240, for example. Numerous other well-known operations related to the websites 240 may also be performed by the connected device 200.

The connected device 200 may be configured to execute the website access application, such as web user interface application (a web browser, for example), or a stand-alone application (a mobile app, for example), and as a result, the wireless data transmission 280 from the connected device 200 to the accessed website 240 via the LAN 222 and the WAN 224 is performed. The website access application may automatically cause the wireless data transmission 280, or, alternatively, the wireless data transmission 280 may be generated as a result of an action by the user 204 through user interface controls of the website access application.

The connected device 200 may create the connection using a packet protocol from the website access application of the connected device 200 to the target website 240. The target website 240 may host a server application enabling access by the website access application. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the wireless data transmission 280 (using TCP streams or UDP datagrams, for example). In the Internet Protocol suite, the wireless data transmission 280 is operated in a link layer, an internet layer, and a transport layer, and the requests transmitted in the wireless data transmission 280 are operated in an application layer.

As used herein, the term "monitoring" refers to user-approved lawful interception or monitoring of the wireless data transmission 280 with a purpose and goal of increasing cybersecurity related to the connected device 200 and its operating environment. As the radio signal of the wireless data transmission 280 is monitored, the wireless data transmission 280 is accessed and collected between the transmitting device and the receiving device. The wireless data transmission 280 may be monitored even if the digital data transmission units (such as messages) of the wireless data transmission 280 are addressed to the receiving device (such as the customer-premises equipment 230, or the target website 240). The monitoring may be implemented so that the wireless data transmission 280 is passively monitored, i.e., the wireless data transmission 280 is not affected by the monitoring. Alternatively, if needed, the monitoring may include a seizing of the wireless data transmission 280, i.e., the wireless data transmission 280 is actively influenced so that a connection and/or requests and/or responses are blocked until it may be decided whether a cybersecurity action (such as blocking of the wireless data transmission 280) is required.

As used herein, the term "wireless data transmission" refers to the transmission and/or reception of (digital) data between the connected device 200 and the customer-premises equipment 230. The wireless data transmission 280 is transferred using digital data transmission units over a communication medium such as one or more communication channels between the connected device 200 and another network node such as the customer-premises equipment 230 or the target website 240. Besides over radio interface in the WLAN 222, the data may be conveyed over another transmission medium (implemented by copper wires, or optical fibers, for example) in the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable wireless data transmission 280. The communication protocols may implement a protocol stack with different conceptual protocol layers.

The wireless data transmission 280 may be monitored by a cybersecurity client 252 operating in the customer-premises equipment 230. The wireless data transmission 280 may be accessed and collected by the cybersecurity client 252. The cybersecurity client 252 may also access a data structure related to the wireless data transmission 280 established and maintained at the CPE 230 after a successful handshake sequence between the connected device 200 and the CPE 230. The monitored wireless data transmission 280 may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected device 200 and its communication) to enable the device identification.

The WAN such as the Internet 224 uses the Internet Protocol suite including TCP/IP and UDP/IP to globally connect computer networks so that communication is enabled between the connected devices 200, 206, 212 and various Internet services provided typically by the websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

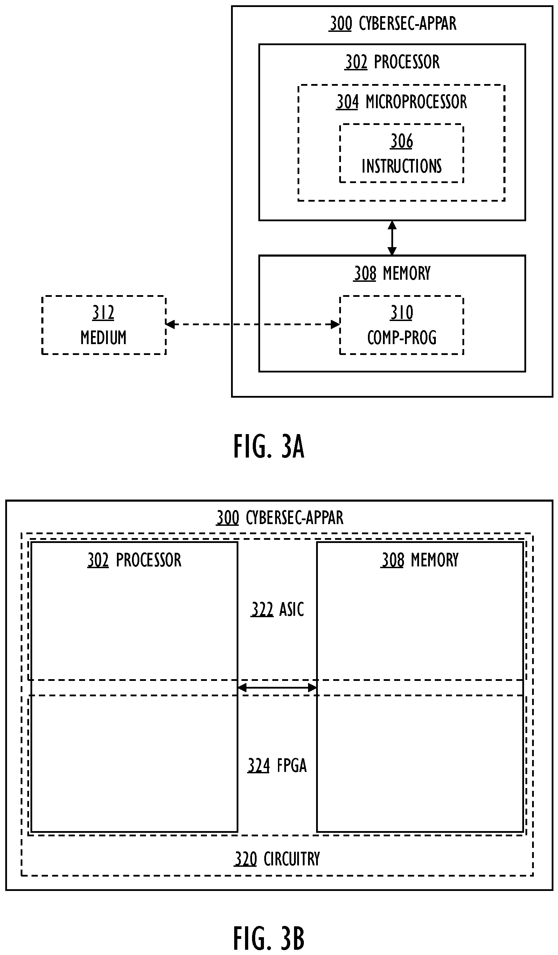

FIG. 3A and FIG. 3B are block diagrams illustrating examples of a cybersecurity apparatus 300. The method described with reference to FIG. 1A and FIG. 1B may be implemented by the cybersecurity apparatus 300. The apparatus 300 may execute the operations defined in the method. The apparatus 300 may implement an algorithm, which includes the operations of the method, but may optionally include other operations related to the cybersecurity in general. Note that the method described with reference to FIG. 1A and FIG. 1B may be implemented as a part of the cybersecurity client 252 running in the customer-premises equipment 230 as shown in FIG. 2. As shown in FIG. 2, the cybersecurity apparatus 300 may comprise various distributed actors 252, 254 communicatively coupled 274 with each other.

The operations of the method may be implemented in connection with various other aspects of cybersecurity operations, such as a device identification, device intelligence, household intelligence, and application detection, for example.

Various artificial intelligence (AI) technologies executed in the customer-premises equipment 230 and/or in the computing resource 256 may be used for the implementation. Machine learning (ML) algorithms in general analyze data related to the connected devices 200, 206, 212 and their wireless data transmissions 280, 282, 284 traffic via the customer-premises equipment 230 to identify patterns related to the risk score and the software platforms. The machine learning algorithms are able to adapt and improve over time, thereby enabling recognition of new and evolving Internet scams. Clustering algorithms are unsupervised learning algorithms that group similar data points together, helping to identify behaviors related to the risk score and the software platforms in wireless data transmissions 280, 282, 284. Rule-based algorithms rely on predefined rules to detect behavior related to the risk score and the software platforms, especially regarding well-known attack patterns. Deep learning is a subset of machine learning that uses neural networks with many layers to analyze complex behavior patterns in large datasets. Natural language processing (NLP) may be used to analyze and understand human language to detect phishing emails, and monitor wireless data transmissions 280, 282, 284 for suspicious activity benefiting the scammer 292. Behavioral analytics may be used to analyze the behavior of the users 204, 210, 216 as expressed via the wireless data transmissions 280, 282, 284 of their connected devices 200, 206, 212 to identify unusual activities as explained before in relation to the various types of scams. Automated threat hunting is based on AI-powered tools to proactively search for user behavior related to the various scams. Anomaly detection may be used to identify unusual patterns or behaviors that deviate from the norm. Finally, predictive analytics may be used to forecast potential risky behavior by the user 204 based on analyzing historical data related to the connected device 200 and its wireless data transmission 280.

The cybersecurity apparatus 300 comprises one or more memories 308, and one or more processors 302 coupled to the one or more memories 308 configured to execute the operations described in FIG. 1A and FIG. 1B.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 308 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as Go, Java, C, or C++, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASIC) 322, field-programmable gate arrays (FPGA) 324, application-specific standard products (ASSP), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

The monitoring 116 of the wireless data transmission 280 is performed in connection with the customer-premises equipment 230, such as by the cybersecurity client 252. The determining 112 of the risk score and the detecting 114 of the use of the software platforms may be performed by the cybersecurity client 252, and/or by the cybersecurity server 254.

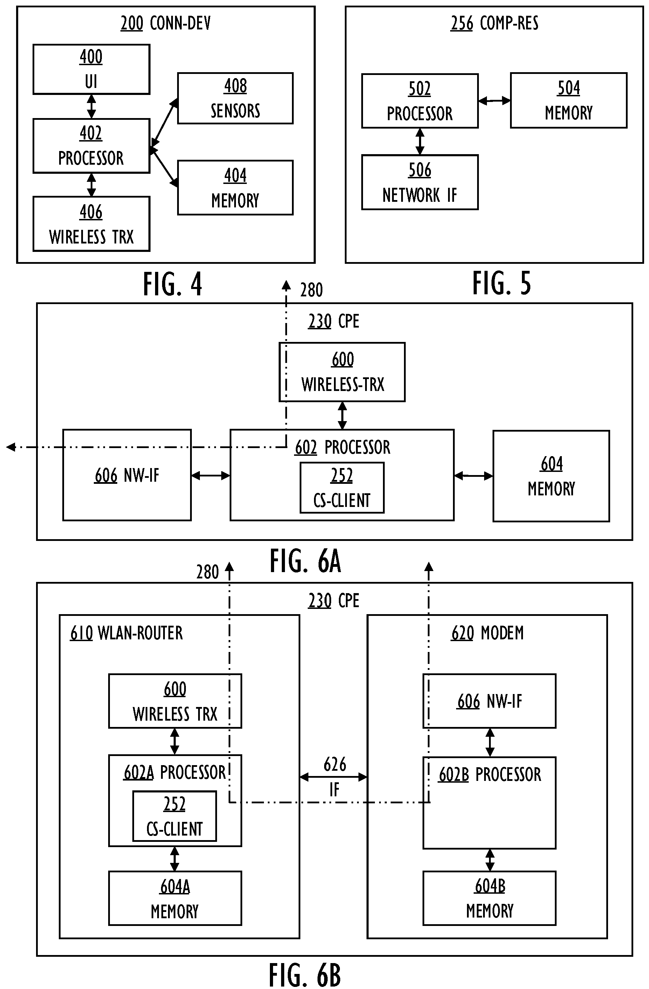

FIG. 4 is a block diagram illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200 may be a personal communication device of the user 204. The connected device 200 may also be an IoT device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 404, and one or more processors 402 coupled to the one or more memories 404 configured to carry out a functionality of the connected device 200. In addition, the connected device 200 comprises a user interface 400 (such as a touch screen or one or more LEDs), and one or more wireless transceivers 406 (such as a WLAN transceiver, a cellular radio network transceiver, and a short-range radio transceiver), and also one or more sensors 408.

FIG. 5 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 5, the server apparatus 256 comprises one or more memories 504, and one or more processors 502 coupled to the one or more memories 504 configured to carry out the functionality of the cybersecurity server 254. In addition, the server apparatus 256 comprises a network interface (such as an Ethernet network interface card) 506 configured to couple the server apparatus 256 to the Internet 224.

FIG. 6A and FIG. 6B are block diagrams illustrating examples of the customer-premises equipment (CPE) 230.

The CPE 230 is located in the household 220 (usually at home but in some cases maybe at office) of the users 204, 210, 216 of the connected devices 200, 206, 212. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the user 204 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G CPE 230 performs the conversion between the 4G/5G cellular radio network signal and the Wi-Fi^{®} or wired signal.

In FIG. 6A, the CPE 230 is an integrated apparatus comprising one or more memories 604, and one or more processors 602 coupled to the one or more memories 604 configured to carry out a part of the method/algorithm in some examples. Additionally, the CPE 230 comprises a wireless radio transceiver 600 configured to create the WLAN 222 for enabling access by the connected device 200. The CPE 230 also comprises a network interface 606 to act as a modem configured to connect to the telecommunication circuit of the carrier at the demarcation point, i.e., to the WAN 224. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The CPE 230 may be running the cybersecurity client 252.

In FIG. 6B, the CPE 230 is a two-part apparatus. A WLAN router part 610 comprises the one or more memories 604A, the one or more processors 602A coupled to the one or more memories 604A configured to carry out the method/algorithm, and the wireless transceiver 600 to create the LAN 222 for enabling access by the connected device 200. A modem part 620 comprises the one or more processors 602B coupled to one or more memories 604B configured to carry out modem operations, and the network interface 606 to act as the modem configured to connect to the WAN 224. The WLAN router part 610 may be purchased by the user 204 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may in a stand-alone fashion carry out the method/algorithm, or a part of the method/algorithm functionality may be augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
determining (112) that a risk score for a household accessing the Internet from one or more connected devices via a customer-premises equipment of the household meets a predetermined condition;
detecting (114) a use of a software platform enabling a risky behavior on a specific connected device of the one or more connected devices; and
in response to determining (112) that the risk score for the household accessing the Internet from the one or more connected devices via the customer-premises equipment of the household meets the predetermined condition and detecting (114) the use of the software platform enabling the risky behavior on the specific connected device of the one or more connected devices, blocking (128) a data transmission from the software platform on the specific connected device to the Internet via the customer-premises equipment of the household.

2. The method of claim 1, further comprising:
in response to receiving (102) a user instruction, determining (104) the risk score so that the risk score meets the predetermined condition.

3. The method of any preceding claim, further comprising:
determining (106) the risk score based on characteristics of the one or more connected devices.

4. The method of claim 3, wherein determining (106) the risk score based on the characteristics of the one or more connected devices further comprises:
in response to the characteristics of the one or more connected devices indicating (134) one or more of a low proportion of technologically advanced connected devices, a high proportion of old generation connected devices, a personal elderly alarm connected device, and an elderly health monitoring connected device, increasing (136) the risk score.

5. The method of any preceding claim, further comprising:
determining (108) the risk score based on a usage of predetermined software platforms on the one or more connected devices.

6. The method of claim 5, wherein determining (108) the risk score based on the usage of the predetermined software platforms on the one or more connected devices further comprises:
in response to the usage of the predetermined software platforms on the one or more connected devices indicating (138) one or more of a high proportion of use of a television software platform, a high proportion of use of a radio software platform, a high proportion of use of a dating software platform followed by a high proportion of use of an instant messaging software platform or a video conferencing software platform or a social media software platform, a high proportion of use of an online gambling software platform, and an absence of a remote working software platform, increasing (140) the risk score.

7. The method of any preceding claim, further comprising:
determining (110) the risk score based on one or more network behavioral profiles of the one or more connected devices.

8. The method of claim 7, wherein determining (110) the risk score based on the one or more network behavioral profiles of the one or more connected devices further comprises:
in response to the one or more network behavioral profiles indicating (142) one or more of a retired user network behavioral profile, an attacker from a different time zone network behavioral profile, a compulsive user network behavioral profile, increasing (144) the risk score.

9. The method of any preceding claim, further comprising:
determining (146) one or more user profiles for the household based on one or more of characteristics of the one or more connected devices, a usage of predetermined software platforms on the one or more connected devices, and one or more network behavioral profiles of the one or more connected devices; and
determining (148) the risk score based on the one or more user profiles for the household, wherein the risk score comprises one or more sub-scores for one or more fraud categories, wherein each fraud category targets the one or more user profiles.

10. The method of any preceding claim, wherein detecting (114) the use of the software platform enabling the risky behavior on the specific connected device of the one or more connected devices further comprises:
monitoring (116A) a wireless data transmission between the specific connected device and the customer-premises equipment to obtain network traffic data; and
determining (118) that the software platform enabling the risky behavior is used on the specific connected device based on the network traffic data.

11. The method of any preceding claim, wherein detecting (114) the use of the software platform enabling the risky behavior on the specific connected device of the one or more connected devices further comprises:
determining (120) that a remote access software platform is used on the specific connected device.

12. The method of any preceding claim, wherein detecting (114) the use of the software platform enabling the risky behavior on the specific connected device of the one or more connected devices further comprises:
determining (122) that an untraceable payment platform is used on the specific connected device.

13. The method of any preceding claim, wherein detecting (114) the use of the software platform enabling the risky behavior on the specific connected device of the one or more connected devices further comprises:
determining (124) that a social media platform is used on the specific connected device.

14. The method of any preceding claim, wherein detecting (114) the use of the software platform enabling the risky behavior on the specific connected device of the one or more connected devices further comprises:
determining (126) that an online gambling platform is used on the specific connected device.

15. An apparatus comprising means for carrying out the method of any preceding claim 1-14.

16. A computer program product comprising instructions which, when executed by an apparatus, cause the apparatus to carry out the method of any preceding claim 1-14.

17. A computer-readable medium comprising a computer program with instructions which, when executed by an apparatus, cause the apparatus to carry out the method of any preceding claim 1-14.
